# EUROPEAN PATENT SPECIFICATION

(11) **EP 2 011 189 B1**
(45) Date of publication and mention of the grant of the patent: **27.03.2013**
(21) Application number: 07734341.6
(22) Date of filing: 19.04.2007
(51) Int. Cl.: E03C 1/05, H01R 13/15, H01R 13/24, F16K 31/05, H01M 2/20

(54) **SENSING FAUCET**
MESSENDE ARMATUR
ROBINET À CAPTEUR

(30) Priority: 20.04.2006 CN 200620041184 U
(43) Date of publication of application: 07.01.2009
(73) Proprietor: Shanghai Kohler Electronics, Ltd., Shanghai (CN)
(72) Inventor: WEIGEN, Chen, Shanghai (CN)
(74) Representative: Wightman, David Alexander
(86) International application number: PCT/IB2007/001022
(87) International publication number: WO 2007/122476

(56) References cited:
- WO-A1-99/22080
- CN-A- 1 525 088
- CN-Y- 2 311 077
- CN-Y- 2 455 985
- CN-Y- 2 545 727
- DE-A1- 10 048 763
- DE-U1- 9 412 068
- JP-A- 08 138 793
- JP-A- 2003 045 603
- US-A- 5 586 746
- US-A- 5 988 588
- US-A- 6 082 407

## Description

### Background technology

Publicly known sensing faucet installation structures basically consist of two types. One type has the electric control box and battery compartment directly installed onto the valve body, and a faucet shell is used to cover them. Such a structure is largely restricted by the space within the faucet shell. For the sake of disassembling the battery, the battery compartment should be installed at a position that can be directly disassembled. If the faucet is limited to a small diameter of tens of millimeters, it is very hard to design a suitable structure. The other type has the electric control box and battery compartment installed onto the faucet shell, which moves together with the electric control box and battery compartment during installation and disassembling. However, with this type, there should be a plug connected to the solenoid valve on the valve body. The plug should be disconnected during disassembling. Such a structure may not be convenient for installation and disassembling.

A self-closing faucet is disclosed in WO-A-99/22080 in which an actuator assembly mounted on the valve body is operable by a user depressing a top cap to actuate a switch that triggers a timer circuit to operate a solenoid valve to supply water to an outlet fitting of the faucet for a predetermined interval of time. A battery for supplying power to the timer circuit can be accessed by removing the top cap and a cover.

An electrical connector is disclosed in DE-A-10048763 in which a plug is removably received in a socket to connect a wire harness to strip conductors. The socket has a male part and a female part connected together by interlocking lugs and recesses to maintain contact between contact pins on the male part and the strip conductors both when the plug is inserted in the socket and when the plug is removed from the socket.

### Invention content

In order to overcome the disadvantages of the existing sensing faucet installation structure, the present invention provides a new type of faucet structure, which not only is less demanding to the faucet's outer look, but also provides convenient disassembling. At the same time, stable function and service life can be guaranteed.

### Summary of the Invention

The present invention provides a sensing faucet as defined in claim 1. Preferred features of the sensing faucet are the subject of the dependent claims.

A preferred embodiment of the present invention may provide the electric control box and battery compartment installed onto the faucet shell. A connector is installed at the lower part of the battery compartment, and a plug seat is installed onto the faucet valve body. The plug preferably has 2 pins with internal springs, and the pins are installed in a rubber stopper. The tip of the pins can withdraw when pressed so that vertical tolerance can be removed. When installing the faucet shell, 2 guide pins on the valve body engage grooves on the faucet shell so that the plug can be lined up and directed into aligned engagement with the plug seat. The pins directly press an electric panel inside the plug seat; at the same time, there are circular tendons around a rubber stopper to form a seal. When disassembling the faucet shell, the faucet shell can be directly pulled out and the plug automatically detaches the plug seat. This arrangement is very convenient.

### Brief Description of the Drawing Figures

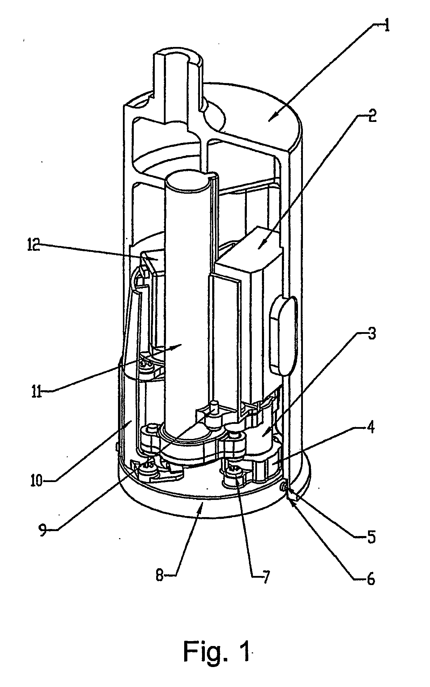

Drawing Figure 1 is an illustration of the assembled sensing faucet, with a cut-out view of the faucet shell.

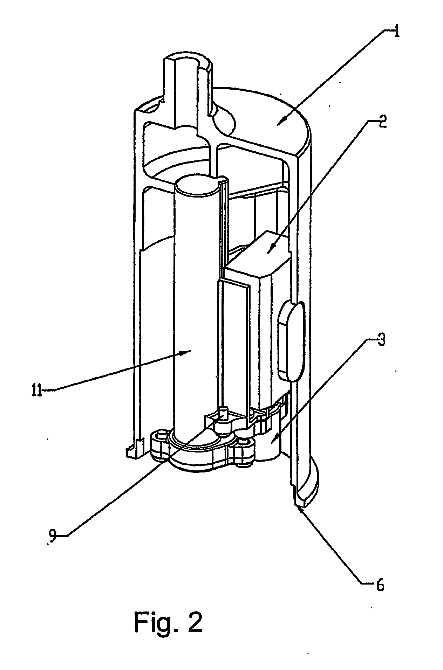

Drawing Figure 2 is a cut-out illustration of the faucet shell components.

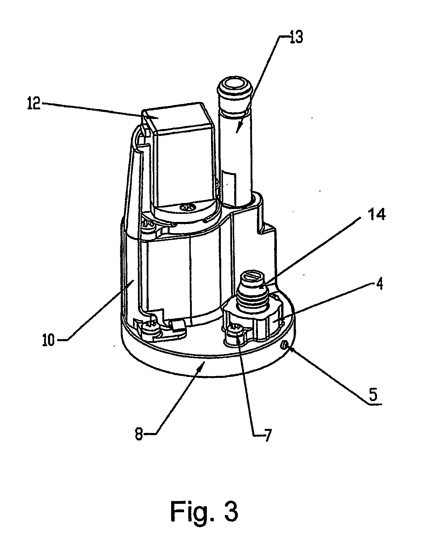

Drawing Figure 3 is an illustration of the valve body assembly.

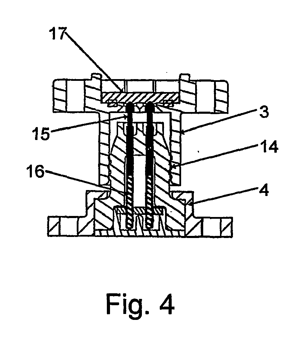

Drawing Figure 4 is a cross-sectional illustration of the plug.

In the drawings, 1. faucet shell; 2. electric control box; 3. plug seat; 4. plug; 5. guide pin; 6. positioning groove; 7. mounting screw; 8. valve body; 9. mounting screw; 10. wire protection cover_{;} 11. battery compartment assembly; 12. solenoid valve; 13. outlet pipe; 14. circular tendons; 15. electrical pins; 16. springs; 17. electric panel

### Detailed Description of the Preferred Embodiments

In Figure 1, the faucet shell 1 is shown mounted on the valve body 8. proper alignment of the faucet shell 1 and the valve body 8 is provided by sliding engagement of the guide pin 5 into the positioning groove 6. The plug 4 is inserted into the plug seat 3 in this installed position, to provide an electrical connection therebetween. The electrical connection between the plug 4 and plug seat 3 allows power from batteries within the battery compartment assembly 11 to operate the solenoid valve 12 when power is activated by electric control box 2 which switches power on and off. The electric control box 2 may also include a sensor, the activation and deactivation of which switches the power on and off. The sensor may preferably be a motion or proximity sensor.

Figure 2 depicts a cut-out view of only the faucet shell 1 portion, with installed battery compartment assembly 11, electric control box 2, and plug seat 3. Mounting screws 9 may be utilized to removably install these components within the faucet shell 1.

Figure 3 depicts only the valve body 8 portion, with installed solenoid valve 12 and plug 4. The solenoid valve 12 and plug 4 are electrically connected. A wire protection cover 10 may be provided to protect the electrical connection. Mounting screws 7 may be provided to removably install these components onto the valve body 8.

A fluid inlet (not shown) may be fluidly connected to the valve body 8. The solenoid valve 12 opens and closes a valve, permitting or restricting fluid flow into and through outlet pipe 13.

Figure 4 is a cross-sectional view of the plug 4 and plug seat 3. The plug 4 has at least one electric pin 15 which is spring loaded by a spring 16 to allow movement in the longitudinal axial direction. The spring loaded electric pin 15 allows for electrical contact to be maintained with the electric panel 17 in the plug seat 3 when the plug 4 is inserted into the plug seat 3.

Although the preferred embodiment shows the plug 4 being mounted on the valve body 8, and the plug seat 3 being mounted on the faucet shell 1, the relative positions of the plug 4 and plug seat 3 may be switched.

Figures 3 and 4 depict the plug 4 as having optional circular tendons 14 that serve as a seal member between the plug 4 and plug seat 3. The circular tendons may be made of rubber or a similar sealing material. The circular tendons 14 may be formed on either or both of the plug 4 and plug seat 3. Also, while the preferred embodiment shows the electric pin(s) 15 in the plug 4, and the electric panel(s) 17 in the plug seat 3, the electric pin(s) 15 and the electric panel(s) 17 may be formed on either the plug 4 or plug seat 3.

Although the present invention has been shown and described herein by way of preferred embodiments, it is understood that the invention may be modified without departing from the scope of the invention as defined in the following claims.

## Claims

1. A sensing faucet comprising:
a faucet shell (1) having an electric control box (2) and a battery compartment (11);
a valve body (8) having a solenoid valve (12); and
first and second electrical connection components (3,4)
**characterised in that**
the electrical control box (2) includes a motion or proximity sensor;
the first electrical connection component is a plug seat (3) and the second electrical connection component is a plug (4);
wherein one of the electrical connection components (3,4) is provided on the faucet shell (1), and the other electrical connection component (3,4) is provided on the valve body (8);
wherein at least one electrical panel (17) is disposed on one of the plug (4) or the plug seat (3), and at least one spring loaded electrical pin (15) is disposed on the other of the plug (4) or the plug seat (3);
wherein the plug (4) is removably received in a plug receiving position within the plug seat (3) in an installed position of the faucet shell (1) on the valve body (8);
wherein a tip of the at least one spring loaded electrical pin (15) is disposed to be in contact with the at least one electrical panel (17) when the plug (4) is received within the plug seat (3) in the plug receiving position to provide an electrical connection therebetween that allows operation of the solenoid valve (12) when power is activated by the electric control box (2); and
wherein the plug (4) automatically detaches the plug seat (3) when the faucet shell (1) is uninstalled.

2. The sensing faucet of Claim 1, wherein two spring-loaded electrical pins (15) are provided in the plug (4).

3. The sensing faucet of Claim 1, wherein at least one of the plug (4) and plug seat (3) is provided with a seal member (14) disposed between the plug (4) and the plug seat (3) with the plug (4) in the plug receiving position within the plug seat (3).

4. The sensing faucet of Claim 3, wherein the seal member (14) is provided on the plug (4).

5. The sensing faucet of Claim 1, wherein the at least one electrical panel (17) is disposed on the plug seat (3), and the at least one spring-loaded electrical pin (15) is disposed on the plug (4).

6. The sensing faucet of Claim 1, wherein the plug seat (3) is provided on the faucet shell (1), and the plug (4) is provided on the valve body (8).

7. The sensing faucet of Claim 1, further comprising a guide pin (5) and a positioning groove (6) which slidably engage each other to provide alignment and positioning of the faucet shell (1) on the valve body (8), wherein the guide pin (5) is disposed on one of the faucet shell (1) or the valve body (8), and the positioning groove (6) is disposed on the other of the faucet shell (1) or the valve body (8).

8. The sensing faucet of Claim 1, wherein the at least one electrical pin (15) is movable along a longitudinal axis of the at least one electrical pin (15).

9. The sensing faucet of Claim 1, wherein the solenoid valve (12) opens and closes a valve permitting or restricting fluid flow into and through an outlet pipe (13).

10. The sensing faucet of Claim 1, wherein the electrical connection between the plug (4) and the plug seat (3) allows battery power from the battery compartment (11) to operate the solenoid valve (12) when power is activated by the control box (2).

11. The sensing faucet of Claim 1, wherein activation and deactivation of the sensor switches power on and off.

## Patentansprüche

1. Eine messende Armatur bestehend aus:
einem Armaturengehäuse (1) mit einem Schaltkasten (2) und einem Batteriefach (11);
einem Ventilkörper (8) mit einem Magnetventil (12); und
ersten und zweiten elektrischen Anschlusskomponenten (3, 4),
**dadurch gekennzeichnet, dass**
der Schaltkasten (2) einen Bewegungs- oder Nähesensor aufweist;
wobei die erste elektrische Anschlusskomponente eine Steckbuchse (3) und die zweite elektrische Anschlusskomponente eine Stecker (4) ist;
wobei eine der elektrischen Anschlusskomponenten (3, 4) am Armaturengehäuse (1) positioniert ist und die anderen elektrische Anschlusskomponente (3, 4) am Ventilkörper (8) positioniert ist;
wobei zumindest eine Schaltplatte (17) entweder am Stecker (4) oder an der Steckbuchse (3) angeordnet ist und zumindest ein gefederter elektrischer Stift (15) am verbleibenden Stecker (4) oder an der Steckbuchse (3) angeordnet ist;
wobei der Stecker (4) entfernbar in einer Steckeraufnahmeposition in der Steckbuchse (3) in einer installierten Position des Armaturengehäuses (1) am Ventilkörper (8) aufgenommen wird;
wobei eine Spitze des zumindest einen gefederten elektrischen Stifts (15) so angeordnet ist, dass sie mit der zumindest einen Schaltplatte (17) in Kontakt ist, wenn der Stecker (4) in der Steckbuchse (3) in der Steckeraufnahmeposition aufgenommen wird, um hierdurch einen elektrischen Anschluss zu erstellen, der den Betrieb des Magnetventils (12) ermöglicht, wenn durch den Schaltkasten (2) Strom eingeschaltet wird; und
wobei der Stecker (4) bei Ausbau des Armaturengehäuses (1) die Steckbuchse (3) automatisch trennt.

2. Eine messende Armatur entsprechend Anspruch 1, wobei im Stecker (4) zwei gefederte elektrische Stifte (15) vorgesehen sind.

3. Die messende Armatur entsprechend Anspruch 1, wobei zumindest entweder der Stecker (4) oder die Steckbuchse (3) mit einer Dichtung (14) versehen ist, die, wenn der Stecker in der Steckeraufnahmeposition in der Steckbuchse (3) ist, zwischen dem Stecker (4) und der Steckbuchse (3) positioniert ist.

4. Die messende Armatur entsprechend Anspruch 3, wobei die Dichtung (14) am Stecker (4) vorgesehen ist.

5. Die messende Armatur entsprechend Anspruch 1, wobei die zumindest eine Schaltplatte (17) an der Steckbuchse (3) positioniert ist und der zumindest eine gefederte elektrische Stift (15) am Stecker (4) positioniert ist.

6. Die messende Armatur entsprechend Anspruch 1, wobei die Steckbuchse (3) am Armaturengehäuse (1) vorgesehen und der Stecker (4) am Ventilkörper (8) vorgesehen ist.

7. Die messende Armatur entsprechend Anspruch 1, zu der weiterhin ein Führungsstift (5) und eine Positionsnut (6) gehören, die ineinander geschoben werden, um Ausrichten und Positionieren des Armaturengehäuses (1) am Ventilkörper (8) zu ermöglichen, wobei der Führungsstift (5) am Armaturengehäuse (1) oder am Ventilkörper (8) positioniert und die Positionsnut (6) am verbleibenden Ventilkörper (1) oder Ventilköper (8) positioniert ist.

8. Die messende Armatur entsprechend Anspruch 1, wobei der zumindest eine elektrische Stift (15) entlang einer Längsachse des zumindest einen elektrischen Stifts (15) bewegt werden kann.

9. Die messende Armatur entsprechend Anspruch 1, wobei das Magnetventil (12) ein Ventil öffnet und schließt, um einen Flüssigkeitsstrom in und durch das Auslassrohr (13) zu ermöglichen oder einzuschränken.

10. Die messende Armatur entsprechend Anspruch 1, wobei der elektrische Anschluss zwischen dem Stecker (4) und der Steckbuchse (3) ermöglicht, dass der Batteriestrom vom Batteriefach (11) das Magnetventil (12) operiert, wenn der Strom durch den Schaltkasten (2) eingeschaltet wird.

11. Die messende Armatur entsprechend Anspruch 1, wobei ein Einschalten und Ausschalten des Sensors den Strom ein- und ausschaltet.

## Revendications

1. Un robinet à capteur comprenant :
une coque de robinet (1) possédant un boîtier de commande électrique (2) et un compartiment pour batterie (11),
un corps de soupape (8) possédant une soupape à solénoïde (12), et
un premier et un deuxième composants de connexion électrique (3, 4)
**caractérisé en ce que**
le boîtier de commande électrique (2) comprend un capteur de mouvement et de proximité,
le premier composant de connexion électrique est un siège de prise (3) et le deuxième composant de connexion électrique est une prise (4),
où l'un des composants de connexion électrique (3, 4) est installé sur la coque de robinet (1) et l'autre composant de connexion électrique (3, 4) est installé sur le corps de soupape (8),
où au moins un panneau électrique (17) est disposé sur un élément parmi la prise (4) ou le siège de prise (3), et au moins une broche électrique chargée par ressort (15) est disposée sur l'autre élément parmi la prise (4) ou le siège de prise (3),
où la prise (4) est reçue de manière amovible dans une position de réception de prise à l'intérieur du siège de prise (3) dans une position installée de la coque de robinet (1) sur le corps de soupape (8),
où une extrémité de la au moins une broche électrique chargée par ressort (15) est disposée de façon à être en contact avec le au moins un panneau électrique (17) lorsque la prise (4) est reçue à l'intérieur du siège de prise (3) dans la position de réception de prise de façon à fournir une connexion électrique entre ceux-ci qui permet un actionnement de la soupape à solénoïde (12) lorsque l'alimentation électrique est activée par le boîtier de commande électrique (2), et
où la prise (4) se détache automatiquement du siège de prise (3) lorsque la coque de robinet (1) est désinstallée.

2. Le robinet à capteur selon la Revendication 1, où deux broches électriques chargées par ressort (15) sont fournies dans la prise (4).

3. Le robinet à capteur selon la Revendication 1, où au moins un élément parmi la prise (4) et le siège de prise (3) est muni d'un élément d'étanchéité (14) disposé entre la prise (4) et le siège de prise (3) avec la prise (4) dans la position de réception de prise à l'intérieur du siège de prise (3).

4. Le robinet à capteur selon la Revendication 3, où l'élément d'étanchéité (14) est installé sur la prise (4).

5. Le robinet à capteur selon la Revendication 1, où le au moins un panneau électrique (17) est disposé sur le siège de prise (3) et la au moins une broche électrique chargée par ressort (15) est disposée sur la prise (4).

6. Le robinet à capteur selon la Revendication 1, où le siège de prise (3) est installé sur la coque de robinet (1) et la prise (4) est installée sur le corps de soupape (8).

7. Le robinet à capteur selon la Revendication 1, comprenant en outre une broche de guidage (5) et une rainure de positionnement (6) qui entrent en prise de manière coulissante l'une avec l'autre de façon à fournir un alignement et un positionnement de la coque de robinet (1) sur le corps de soupape (8), où la broche de guidage (5) est disposée sur un élément parmi la coque de robinet (1) ou le corps de soupape (8), et la rainure de positionnement (6) est disposée sur l'autre élément parmi la coque de robinet (1) ou le corps de soupape (8).

8. Le robinet à capteur selon la Revendication 1, où la au moins une broche électrique (15) est déplaçable le long d'un axe longitudinal de la au moins une broche électrique (15).

9. Le robinet à capteur selon la Revendication 1, où la soupape à solénoïde (12) ouvre et ferme une soupape favorisant ou limitant le flux de liquide dans et au travers d'un tuyau de sortie (13).

10. Le robinet à capteur selon la Revendication 1, où la connexion électrique entre la prise (4) et le siège de prise (3) permet à une alimentation électrique par batterie provenant du compartiment pour batterie (11) d'actionner la soupape à solénoïde (12) lorsque l'alimentation électrique est activée par le boîtier de commande (2).

11. Le robinet à capteur selon la Revendication 1, où l'activation et la désactivation du capteur active et désactive l'alimentation électrique.
